# EUROPÄISCHE PATENTSCHRIFT

(11) **EP 0 819 233 B1**
(45) Veröffentlichungstag und Bekanntmachung des Hinweises auf die Patenterteilung: **16.12.1998**
(21) Anmeldenummer: 96907463.2
(22) Anmeldetag: 14.03.1996
(51) Int. Cl.: F23G 5/027, F23G 5/46, F23J 15/02, F23J 15/04, F23J 15/06

(54) **VERFAHREN UND VORRICHTUNG ZUR THERMISCHEN BEHANDLUNG VON ABFALLSTOFFEN**
PROCESS AND PLANT FOR THE THERMAL TREATMENT OF WASTE MATERIAL
PROCEDE ET DISPOSITIF DE TRAITEMENT THERMIQUE DE DECHETS

(30) Priorität: 05.04.1995 DE 19512785
(43) Veröffentlichungstag der Anmeldung: 21.01.1998
(73) Patentinhaber: MANNESMANN Aktiengesellschaft, 40213 Düsseldorf (DE)
(72) Erfinder: SCHMIDT, Rüdiger, 81377 München (DE)
(74) Vertreter: Tetzner, Michael, Dipl.-Ing.
(86) Internationale Anmeldenummer: EP9601085
(87) Internationale Veröffentlichungsnummer: WO9631735

(56) Entgegenhaltungen:
- EP-A- 0 067 139
- EP-A- 0 111 081
- WO-A-93/16147
- DE-A- 3 629 817
- DE-A- 3 909 696
- US-A- 4 206 186

## Beschreibung

Die Erfindung betrifft ein Verfahren sowie eine Anlage zur thermischen Behandlung von Abfallstoffen.

Bei einem aus der Praxis bekannten Verfahren erfolgt eine unterbrechungslose Verbrennung der Abfallstoffe auf einem Rost, wobei mit dem entstehenden Rauchgas außer beträchtlichen Mengen Staub eine ganze Reihe von im Abfall enthaltenen Stoffen gasförmig, als Aerosole bzw. als Stäube freigesetzt werden und nach der Wärmenutzung über Abhitzekessel mit enormem Aufwand aus dem Rauchgas abgetrennt bzw. ausgewaschen werden müssen. Dabei werden in etwa folgende Reinigungsschritte nach dem Abhitzekessel durchgeführt: Entstaubung, zwei-stufige Wäsche mit Eindampfung des Waschwassers vor allem für die gasförmigen Schadgase, Adsorptionsstufe zur Dedioxinierung, Entstickungsanlage mit Wärmetauscher.

Die Einhaltung der gesetzlich vorgeschriebenen Grenzwerte macht einen derart hohen verfahrenstechnischen Aufwand und damit insgesamt eine sehr kostenintensive Behandlung des Restmülls erforderlich.

Aus der EP-B-0 111 081 ist ferner ein Verfahren zur thermischen Behandlung von Abfallstoffen bekannt, bei dem
a) die Abfallstoffe in einer ersten thermischen Behandlungszone einer Pyrolyse unterzogen werden,
b) das dabei entstehende Pyrolysegas in einem Zyklon-Staubabscheider zu einem gewissen Grad entstaubt wird,
c) das entstaubte Pyrolysegas in einer zweiten thermischen Behandlungszone verbrannt wird,
d) das in der zweiten thermischen Behandlungszone entstehende Rauchgas unter Gewinnung von Energie abgekühlt wird und
e) anschließend unter Zugabe basischen Materials in einem Filter von Schadstoffen gereinigt wird.

Das letztlich nach diesem Verfahren über einen Kamin nach außen abgegebene Rauchgas entspricht jedoch, insbesondere im Hinblick auf den Gehalt an NOₓ, gasförmigen Schadgasen und Schwermetallen, wie beispielsweise Quecksilber, bereits jetzt nicht mehr den gesetzlichen Anforderungen, die sich zudem in den nächsten Jahren weiter verschärfen werden.

In der DE-A-36 29 817 wird vorgeschlagen, eine Entstickungsanlage zur Reduzierung des NOₓ-Gehaltes im Rauchgas am Ende einer Verfahrenskette vorzusehen.

Die katalytische Entstickung wird in der Regel bei thermischen Abfallbehandlungsverfahren im optimalen Temperaturbereich von etwa 300°C durchgeführt. Am Ende der Verfahrenskette beträgt jedoch die Temperatur des Rauchgases üblicherweise etwa 70 bis 130°C. Dies bedeutet, daß die derzeit verwendeten Entstickungsanlagen zusätzlich mit einem Wärmetauscher bzw. mit einer Erdgas-Aufheizeinrichtung versehen sind, um zunächst das Rauchgas auf die für die Entstickung erforderliche Temperatur aufzuheizen, um es anschließend vor der Abführung durch den Kamin wieder abzukühlen.

Die Anordnung der Entstickungsanlage in einem Teil der Verfahrenskette, der ein Aufheizen der Rauchgase nicht mehr erforderlich macht, ist bei den derzeit bekannten Verfahren zur thermischen Behandlung von Abfallstoffen nicht möglich, da beim Verbrennungsvorgang im Abfall befindliche Spurenelemente, wie beispielsweise Arsen, Selen und dergleichen, freigesetzt werden und die Entstickungsanlage nach kürzester Zeit funktionsunfähig machen würden.

Zudem bildet sich bei konventioneller thermischer Behandlung von Abfallstoffen in großem Umfang Schwefeldioxid, das mit überschüssigem Luftsauerstoff teilweise zu Schwefeltrioxid reagiert. Diese Verbindung setzt sich wiederum mit dem für die Entstickungsreaktion notwendigen, zugesetzten Ammoniak bzw. Ammoniakwasser oder Harnstoff zu entsprechenden Salzen, vornehmlich Ammoniumhydrogensulfat um. Diese Salze haben stark klebende Eigenschaften und führen deswegen zu unerwünschten Ablagerungen im Katalysatorbereich bzw. den nachfolgenden Wärmetauschern, Rohrleitungen, Abhitzekesseln und sonstigen Aggregaten.

Deswegen kann eine SCR-Entstickungsanlage nicht unmittelbar nach dem Abhitzekessel - vor den Rauchgasreinigungsaggregaten - bei konventionellen Anlagen eingesetzt werden. Sie kann daher nur am Ende der Verfahrenskette vorgesehen werden, wenn der Schwefeldioxid bzw. -trioxidgehalt durch die Rauchgasreinigung entsprechend abgesenkt ist.

Ein weiteres, allerdings in der Abfalltechnik wesentlich seltener angewandtes Entstickungsverfahren ist das sogenannte SNCR-Verfahren, das nichtkatalytisch bei Temperaturen zwischen 850 und 1.000°C durchgeführt wird.

Bei Einsatz des SNCR-Verfahrens in konventionellen thermischen Behandlungsanlagen muß im Abhitzekessel entstickt werden, da das für diese Entstickungsreaktion wirksame "Temperaturfenster" im Bereich von 850 bis 1.000° liegt. Die für die Effizienz der Entstickungsreaktion wichtige Verweilzeit des Rauchgases im "Temperaturfenster" ist aber im Kesselbereich sehr gering, so daß die notwendige Entstickungsrate durch überstöchiometrische Ammoniakzugaben erreicht werden muß. Dies wiederum führt dazu, daß die Folgeprodukte der Rauchgasreinigung einen für alle Entsorgungswege unerwünschten Ammoniakgeruch aufweisen und aufwendig nachbehandelt werden müssen.

Auch das besonders kostengünstige SNCR-Verfahren hat sich aus diesem und den bereits genannten Gründen der Schwefelammoniuzlsalzbildung sowie aufgrund unerwünschter Ablagerungen durch die Reaktion des zugesetzten Ammoniaks im Abhitzekessel mit im Staub enthaltenen Produkten, nicht durchsetzen können.

Aus der US-A-4 206 186 ist es ferner bekannt, ein Pyrolysegas in einer Kühl- und Abscheidezone durch Eindüsen eines Öls auf eine Temperatur von 160°C abzukühlen.

Der Erfindung liegt nun die Aufgabe zugrunde, ein Verfahren sowie eine Anlage zur thermischen Behandlung von Abfallstoffen anzugeben, wobei der anlagentechnische Aufwand für die Reinigung des Rauchgases unter die vorgegebenen Grenzwerte gegenüber dem bekannten Stand der Technik wesentlich verringert wird.

Erfindungsgemäß wird diese Aufgabe durch die Merkmale der Ansprüche 1, 2, 22 und 25 gelöst.

Weitere Ausgestaltungen der Erfindung sind Gegenstand der Unteransprüche.

Ein erstes erfindungsgemäßes Verfahren zur thermischen Behandlung von Abfallstoffen sieht vor, daß
a) die Abfallstoffe in einer ersten thermischen Behandlungszone einer Pyrolyse unterzogen werden,
b) das dabei entstehende Pyrolysegas zu wenigstens 90 Prozent, vorzugsweise wenigstens 95 Prozent, entstaubt wird,
c) das entstaubte Pyrolysegas in einer zweiten thermischen Behandlungszone verbrannt wird,
d) das in der zweiten thermischen Behandlungszone entstehende Rauchgas abgekühlt wird,
e) anschließend das abgekühlte Rauchgas katalytisch entstickt wird und
f) schließlich durch Zugabe entsprechend reaktiver Zusätze in einem Filter von Schadstoffen gereinigt wird.

Erfindungsgemäß kann das in der zweiten thermischen Behandlungszone entstehende Rauchgas bis auf die für die Entstickung optimale Verfahrenstemperatur abgekühlt werden. Dadurch lassen sich die beiden für Aufheizung und Abkühlung vorgesehenen Wärmetauscher in den bekannten Entstickungsanlagen vermeiden.

Das Vorsehen der katalytischen Entstickung unmittelbar nach der Abkühlung der in der zweiten thermischen Behandlungszone entstehenden Rauchgase wird jedoch erst dadurch ermöglicht, daß die Pyrolysegase der ersten thermischen Behandlungszone zu wenigstens 90 Prozent, vorzugsweise wenigstens 95 Prozent, entstaubt werden.

Bei einem zweiten erfindungsgemäßen Verfahren zur thermischen Behandlung von Abfallstoffen ist vorgesehen, daß
a) die Abfallstoffe in einer ersten thermischen Behandlungszone einer Pyrolyse unterzogen werden,
b) das dabei entstehende Pyrolysegas zu wenigstens 90 Prozent, vorzugsweise wenigstens 95 Prozent, entstaubt wird,
c) das entstaubte Pyrolysegas in einer zweiten thermischen Behandlungszone verbrannt wird,
d) anschließend das in der zweiten thermischen Behandlungszone entstehende Rauchgas nichtkatalytisch entstickt wird,
e) das entstickte Rauchgas abgekühlt wird und
f) schließlich durch Zugabe entsprechend reaktiver Zusätze in einem Filter von Schadstoffen gereinigt wird.

Bei beiden erfindungsgemäßen Behandlungsverfahren hat es sich als besonders vorteilhaft herausgestellt, wenn man bereits den Abfallstoffen zur Einbindung der bei der Pyrolyse in der ersten thermischen Behandlungszone freiwerdenden sauren, gasförmigen Schadstoffen feinkörnige, basische Materialien, wie Calciumhydroxid, Calciumkarbonat und/oder Calciumoxid, zugibt. Dadurch werden insbesondere die Schwefeldioxid- bzw. Schwefeltrioxid-Konzentrationen im Rauchgas stark reduziert. Die Zugabe der basischen Materialien wirkt somit auch als Korrosionsschutz für die mit dem Pyrolysegas in Verbindung kommenden Anlagenteile. Vor allem wird dadurch auch die Bildung der klebenden Ammoniumsalze stark verringert, so daß störende Anbackungen vermieden werden.

Erst bei einer Konzentration von Schwefeldioxid im Rauchgas unterhalb von etwa 200 mg/m³ ist die unerwünschte Oxidation von Schwefeldioxid zu Schwefeltrioxid vernachlässigbar.

Bei den der Erfindung zugrundeliegenden Versuchen hat es sich als besonders vorteilhaft erwiesen, bei den reaktiven Zusätzen eine Mischung aus Aktivkohle bzw.-koks und Bikarbonat zu verwenden.

Weitere Ausgestaltungen und Vorteile der Erfindung werden anhand der Beschreibung einiger Ausführungsbeispiele und der Zeichnung näher erläutert.

In der Zeichnung zeigen
- Fig. 1: eine schematische Darstellung einer ersten erfindungsgemäßen Anlage zur thermischen Behandlung von Abfallstoffen,
- Fig. 2: ein zweites Ausführungsbeispiel einer erfindungsgemäßen Anlage und
- Fig.3: ein drittes Ausführungsbeispiel einer erfindungsgemäßen Anlage.

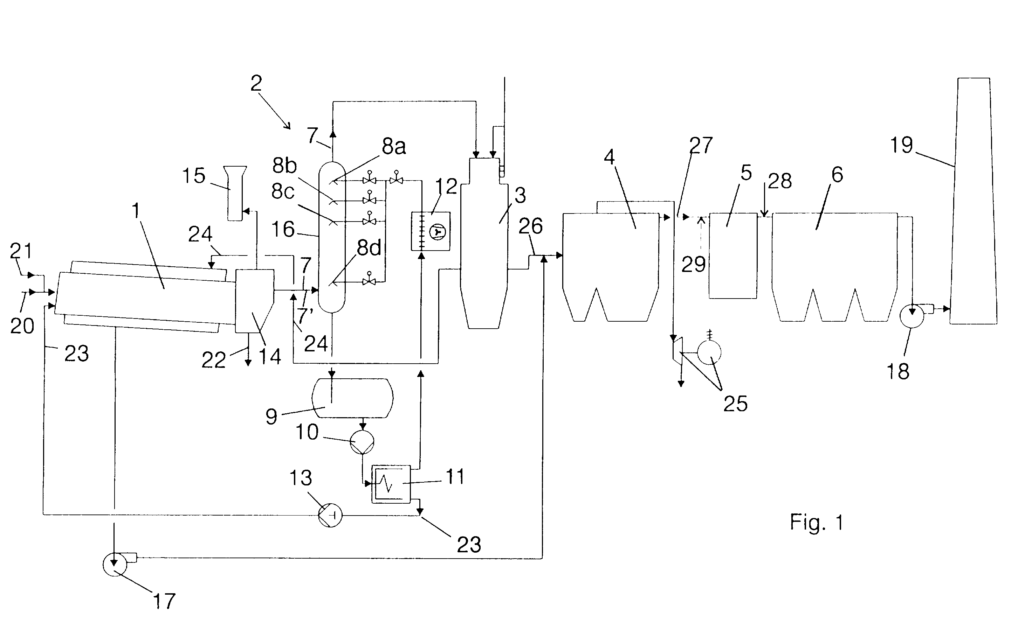

Die in den Fig. 1 bis 3 dargestellten Ausführungsbeispiele einer erfindungsgemäßen Anlage zur thermischen Behandlung von Abfallstoffen enthalten im wesentlichen einen die erste thermische Behandlungszone bildenden Drehofen 1, eine Entstaubungseinrichtung 2, 2', eine durch eine Brennkammer 3 gebildete zweite thermische Behandlungszone, eine aus einem Abhitzekessel 4 bestehende Abkühlzone, eine Entstickungseinrichtung 5, 5' sowie einen Filter 6 zur Gasreinigung.

Das erste erfindungsgemäße Ausführungsbeispiel wird im folgenden anhand der Fig. 1 näher erläutert.

Die Entstaubungseinrichtung 2 enthält einen Kühl- und Waschturm 16, der von Pyrolysegas (Pfeile 7) von unten nach oben durchströmt wird und in den in verschiedenen Ebenen 8a, 8b, 8c, 8d Öl eingedüst wird. Der untere Bereich des Kühl- und Waschturmes 16 ist mit einem Tank 9 verbunden, der über eine Pumpe 10 mit einer Zentrifuge 11 in Verbindung steht. Der eine Ausgang der Zentrifuge 11 steht mit einem Kondensatkühler 12 in Verbindung, während der andere Ausgang der Zentrifuge 11 über eine Pumpe 13 mit dem Eintragsende des Drehofens 1 verbunden ist.

Die Anlage gemäß Fig. 1 enthält weiterhin ein Drehofen-Austragsgehäuse 14, eine hieran angeschlossene Notfackeleinrichtung 15, einen dem Abhitzekessel 4 nachgeschalteten Turbogenerator 25, ein Rauchgas-Rückführungsgebläse 17, ein Saugzuggebläse 18 und einen Kamin 19.

Die Anlage gemäß Fig. 1 wird entsprechend der erfindungsgemäßen Verfahren wie folgt betrieben:

Die thermisch zu behandelnden Abfallstoffe werden dem Eintragsende des Drehofens 1 zugeführt (Pfeil 20). Optional kann dies zusammen mit der Zuführung von feinkörnigen, basischen Materialien wie Calciumhydroxid, Calciumkarbonat und/oder Calciumoxid (Pfeil 21) erfolgen, die zur Einbindung der beim Schwelprozeß entstehenden gasförmigen sauren Schadstoffe dienen.

In dem mittels der Rauchgase der Brennkammer 3 indirekt beheizten Drehofen 1 werden die Abfallstoffe bei einer Temperatur von 450°C bis 550°C entgast. Wurden den Abfallstoffen basische Materialien zugegeben, so wird gleichzeitig ein großer Teil der freiwerdenden gasförmigen Schadstoffe, wie Halogenwasserstoffe und Schwefelverbindungen, bereits im Drehofen eingebunden.

Der inerte, nahezu vollständig entgaste Schwelrückstand wird durch das Drehofen-Austragsgehäuse 14 über Naßentschlacker ausgetragen (Pfeil 22) und nach Metallabtrennung abgelagert. Der Schwelrückstand, der noch etwa 5 bis 30 Prozent Kohlenstoff enthält, kann beispielsweise auch einer dafür geeigneten thermischen Behandlungsanlage, wie beispielsweise einem Kohlekraftwerk, einer Vergasungsanlage oder dergleichen, zugeführt werden. Diese Verarbeitungsmöglichkeit des Schwelrückstandes ist insbesondere aufgrund seiner guten Transport- und Lagerungsfähigkeit, besonders gut geeignet.

Das Pyrolysegas (Pfeil 7), das eine Temperatur von etwa 470°C bis 500°C besitzt, tritt in den unteren Bereich des Kühl- und Waschturmes 16 in diesen ein und durchströmt diese Kühl- und Staubabscheidezone 2 von unten nach oben im Gegenstrom zu dem Öl, das als Kühl- und Staubabscheidemittel in verschiedenen Ebenen 8a, 8b, 8c, 8d eingedüst wird.

In der Kühl- und Staubabscheidezone 2 wird das Pyrolysegas auf eine Temperatur von höchstens 250°C, vorzugsweise auf eine Temperatur zwischen 80 und 180°C abgekühlt. Das Pyrolysegas verläßt den Kühl- und Waschturm 16 beispielsweise mit einer Temperatur von 120°C.

Gleichzeitig wird das Pyrolysegas in der Kühl- und Staubabscheidezone zu wenigstens 90 Prozent, vorzugsweise zu mehr als 95 Prozent, entstaubt.

Das in die Kühl- und Staubabscheidezone eingedüste Öl bildet durch den Sprühvorgang feine Tröpfchen. Gleichzeitig werden in der Kühl- und Staubabscheidezone durch Kondensation von im Pyrolysegas enthaltenen Öldämpfen gleichfalls Öltröpfchen gebildet. An diesen teils durch Versprühen, teils durch Kondensation erzeugten Öltröpfchen werden die im Pyrolysegas enthaltenen, staubförmigen, anorganischen Materialien wirksam adsorbiert.

Da das Pyrolysegas die Kühl- und Staubabscheidezone 2 mit einer oberhalb des Taupunktes liegenden Temperatur verläßt, ist sichergestellt, daß in der Kühl- und Staubabscheidezone sowie in der von dieser Zone zur Brennkammer 3 führenden Leitung noch kein Wasser kondensiert.

Das heiße, staubbeladene Öl wird niveaugeregelt aus dem unteren Bereich der Kühl- und Staubabscheidezone abgezogen und über den Tank 9 und die Pumpe 10 der Zentrifuge 11 zugeführt. Durch Zentrifugieren wird das heiße, staubbeladene Öl in eine stark staubhaltige erste Phase und eine weitgehend staubfreie zweite Phase getrennt. Die erste, stark staubhaltige Phase wird über die Pumpe 13 der Schwelzone, d.h. dem Drehofen 1 zugeführt (Pfeil 23). Die zweite, weitgehend staubfreie Phase des Öles gelangt von der Zentrifuge 11 zum Kondensatkühler 12 und wird dort auf ca. 80°C rückgekühlt, ehe sie erneut den Ebenen 8a, 8b, 8c, 8d der Kühl- und Staubabscheidezone zugeleitet wird.

In der Kühl- und Staubabscheidezone 2 könnte zusätzlich ein sogenannter Venturi-Wäscher oder eine ähnlich ausgebildete Einrichtung vorgesehen werden, um die Staubabscheidung zusätzlich zu verbessern.

Das im Kühl- und Waschturm 16 gekühlte und weitgehend von Staub befreite Pyrolysegas wird in der Brennkammer 3 gegebenenfalls mittels NOₓ-armer Brenner unter Zuführung von Verbrennungsluft verbrannt. Von dem hierbei entstehenden Rauchgas wird ein erster Teilstrom (Pfeil 24) dem Drehofen 1 zur indirekten Beheizung zugeführt. Dieser Teilstrom des Rauchgases wird nach Beheizung des Drehofens 1 über das Rauchgas-Rückführgebläse 17 mit dem zweiten Teilstrom des in der Brennkammer 3 anfallenden Rauchgases (Pfeil 26) vor Eintritt in den Abhitzekessel 4 wieder vereinigt und vermischt. Der im Abhitzekessel 4 erzeugte Dampf wird über den Turbogenerator 16 verstromt. Nach Durchsetzen des Abhitzekessels 4 gelangt das Rauchgas (Pfeil 27) in die Einrichtung 5 zur katalytischen Entstickung. Das Rauchgas wurde dabei im Abhitzekessel 4 auf die für die katalytische Entstickung optimale Temperatur von derzeit 250 bis 300°C abgekühlt. Durch die weitgehende Entstaubung von mehr als 90 Prozent, vorzugsweise mehr als 95 Prozent, in der Entstaubungseinrichtung 2 ist die Anordnung des Entstickungskatalysators unmittelbar nach dem Abhitzekessel 4 problemlos möglich. Das Rauchgas weist vor der Entstickung einen Staubgehalt von höchstens 500 mg Staub/m³, vorzugsweise maximal 200 mg Staub/m³ auf. Ein Aufheizen des Rauchgases vor der Zuführung ist daher nicht erforderlich.

Nach der Einrichtung 5 zur katalytischen Entstickung gelangt das Rauchgas unter Zugabe entsprechend reaktiver Zusätze (Pfeil 28) in den Filter 6, der vorzugsweise als Gewebefilter ausgebildet ist. Dieser Filter 6 wird vorzugsweise bei Gastemperaturen von 170 bis 220°C betrieben, so daß möglicherweise das Rauchgas zwischen der Einrichtung 5 zur katalytischen Entstickung und dem Filter 6 beispielsweise durch Zugabe von Wasser (Pfeil 29) oder indirekt durch Vorheizung des Kesselspeisewassers oder mit Luft weiter abgekühlt wird. Da der größte Teil der Stäube bereits im Kühl-Waschturm 16 abgetrennt wurde, kann der Filter 6 so ausgebildet werden, daß eine optimale Einbindung aller gasförmigen Schadstoffe und Reststäube ermöglicht wird. Durch Zugabe von Aktivkoks bzw. -kohle ist ferner eine einfache Rest-Dedioxinierung sowie eine Reduzierung des Quecksilbergehalts möglich. Ferner könnte durch Dotierung, z.B. mit Schwefel, eine weitere problemlose Quecksilberentfernung erfolgen.

In einer nicht näher dargestellten Variante der Entstaubungseinrichtung 2 sind zwei Kühl- und Staubabscheidezonen vorhanden, die durch zwei Kühl-Waschtürme gebildet werden, die vom Pyrolysegas nacheinander durchströmt werden, wobei das in diesen beiden Stufen anfallende heiße, staubbeladene Öl, vorzugsweise gemeinsam, durch Staubabtrennung und Rückführung aufbereitet wird.

Im Anfahrbetrieb, bei Durchsatzschwankungen sowie zum Ersatz der aus dem Ölkreislauf abgezogenen, staubhaltigen Phase wird eine entsprechend dosierte Menge von hochsiedendem Öl, vorzugsweise Diesel- oder Heizöl, dem Ölkreislauf zugeführt.

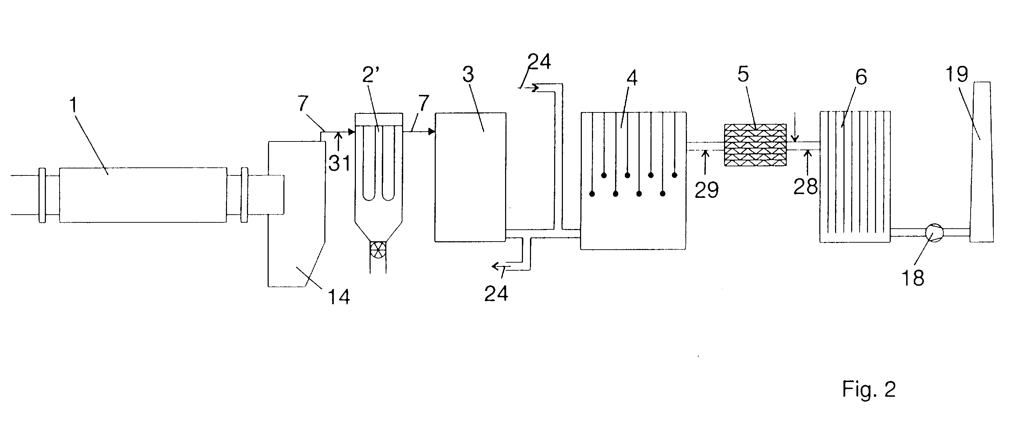

In Fig.2 ist eine Variante der in Fig. 1 dargestellten Anlage veranschaulicht. Gleiche Bauteile sind dabei mit denselben Bezugszeichen versehen und werden nicht mehr gesondert erläutert.

Der wesentliche Unterschied besteht in der Entstaubungseinrichtung 2', die hier als Heißgas-Entstaubungseinrichtung mit keramischen Filterkerzen ausgebildet ist. Der Staub fällt dabei in trockener Form an und läßt sich auf einfache Weise weiter verarbeiten.

Zusätzlich kann auch eine Eindüsung (Pfeil 31) weiterer basischer Materialien vor der Entstaubungseinrichtung 2' ohne großen Aufwand eine weitere deutliche Absenkung der sauren Schadgase erreicht werden, da diese Materialien auf dem Filtermaterial einen Mantel bilden und das Pyrolysegas mit Inhaltsstoffen diesen Mantel durchdringen muß.

Als besonders vorteilhaft hat sich hierbei erwiesen, wenn das Pyrolysegas vor der Entstaubung auf eine höhere Temperatur, beispielsweise durch Erhitzung um 10 bis 50°C, gebracht wird. Hierdurch kann die Kondensation von Teeren und Ölen des Pyrolysegases an den Filterkerzen zuverlässig vermieden werden.

Für die bei 28 zugeführten reaktiven Zusätze kommen insbesondere basische Materialien, wie Natrium-Bikarbonat sowie Kalium- und weitere Natriumverbindungen in Frage. Dadurch wird die Abscheidung von Schadstoffen als Reaktionsprodukte wie z.B. Natriumchlorid und Natriumsulfat im Filter begünstigt.

Als Dotiermaterial für die Quecksilberabscheidung ist ferner der Zusatz von elementarem Schwefel, Natriumsulfid oder dergleichen möglich. Als Adsorptionsmaterial ist ferner der Zusatz von Aktivkoks oder -kohle außerordentlich wirksam.

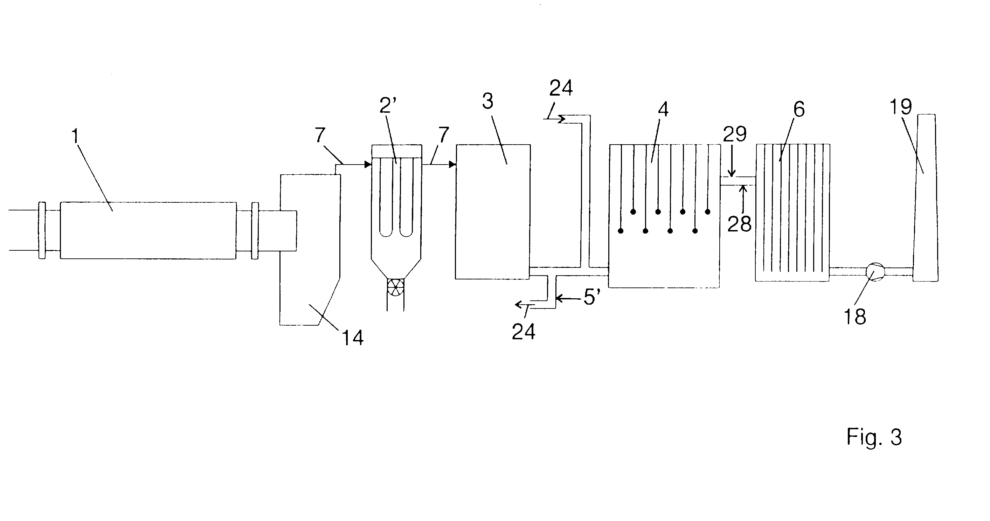

In Fig.3 ist schließlich eine Anlage gemäß einem dritten Ausführungsbeispiel veranschaulicht, die sich von den beiden Anlagen gemäß Fig. 1 und 2 im wesentlichen durch die Entstickungseinrichtung 5' unterscheidet. Bei diesem Ausführungsbeispiel wird eine nichtkatalytische Entstickung unmittelbar nach der zweiten thermischen Behandlungszone, d.h. nach der Brennkammer bei Temperaturen von etwa 800 bis 1.000°C, durchgeführt. Die nichtkatalytische Entstickungseinrichtung 5' wird im dargestellten Ausführungsbeispiel durch eine Einrichtung zur Zugabe von Ammoniak bzw. Ammoniakwasser oder auch Harnstoff (Pfeil 5') gebildet. Die Zugabe erfolgt dabei besonders vorteilhaft in den ersten Teilstrom (Pfeil 24), der dem Drehofen 1 zur indirekten Beheizung zugeführt wird. Dadurch wird eine möglichst lange Verweilzeit des zugegebenen Stoffes, insbesondere Ammoniak, mit dem Rauchgas in einem Temperaturfenster von 850 bis 1.000°C gewährleistet. Auf diese Weise kann der umzusetzende Ammoniakanteil durch eine nahstöchiometrische Ammoniakzugabe minimiert werden. Dadurch ist eine Restammoniakabscheidung bei nachfolgenden Rauchgasreinigungsaggregaten nicht mehr oder in vernachlässigbarem Umfang gegeben. Zudem kann die sehr aufwendige Nachbehandlung der Rauchgas-Reinigungsprodukte zur Beseitigung dieser geruchsintensiven Chemikalie unterbleiben.

Durch den hohen Grad der Entstaubung in der Entstaubungseinrichtung 2' sind die nachfolgenden Anlagenteile, insbesondere der Abhitzekessel 4, durch die Zugabe von Ammoniak nicht gefährdet. Besonders vorteilhaft bei diesem Ausführungsbeispiel ist auch die Zugabe von basischen Materialien, wie Calciumhydroxid, Calciumkarbonat und/oder Calciumoxid, im Bereich der ersten thermischen Behandlungszone, so daß die Schwefeldioxid-bzw. Schwefeltrioxidanteile noch vor der Entstickungseinrichtung 5' größtenteils gebunden werden und dadurch die Bildung von den stark klebenden Ammoniumsalzen vermieden werden.

Zusätzlich schadgaseinbindend und einen strömungsfreien Betrieb fördernd wirkt die weitere Dosierung von basischen Materialien in das Pyrolysegas vor der Entstaubung, wobei diese Materialien auf dem Filter einen Mantel bilden, den das Pyrolysegas mit Inhaltsstoffen durchdringen muß und somit die weitere Reaktion zwischen Base und sauren Schadgasanteilen und damit deren Abscheidung gefördert wird.

Die in Fig.3 dargestellte Anlage kann selbstverständlich auch mit einer Entstaubungseinrichtung 2 betrieben werden, wie sie in Fig. 1 dargestellt ist.

Die erfindungsgemäßen Verfahren bzw. Anlagen gemäß den Fig. 1 bis 3 zeichnen sich dadurch besonders aus, daß der anlagentechnische Aufwand für die Absenkung des NOₓ-Gehalts des Rauchgases unter die vorgegebenen Grenzwerte gegenüber dem bekannten Stand der Technik wesentlich verringert wird.

Ein weiterer, außerordentlich positiver Effekt bei allen erfindungsgemäßen Verfahren ist auch darin zu sehen, daß durch die Aufspaltung in Pyrolyse- und Verbrennungszone die Ausgestaltung der Brennkammer derart gewählt werden kann, daß eine sichere Zerstörung der im Abfall enthaltenen Dioxine und Furane gewährleistet ist. Durch die Homogenisierung des Abfalls bei der Pyrolyse ist es möglich - im Gegensatz zu konventionellen Verfahren -, mit einem geringen Luftüberschuß und damit relativ hohen Temperaturen von über 1.200°C das Pyrolysegas zu verbrennen. Im Gegensatz dazu liegt die Verbrennungstemperatur bei konventionellen Verfahren bei etwa 850 bis 1.000°C. Durch die höheren Temperaturen ist der Zerstörungsgrad aller organischen Verbindungen und insbesondere von Dioxinen und Furanen entsprechend höher.

Darüber hinaus bewirkt die vorherige Entstaubung eine sichere Verhinderung der Dioxin- und Furan-Neubildung auf dem Abhitzeweg, so daß - im Gegensatz zu konventionellen Verfahren - kein eigenes Aggregat zur Dioxin- und Furanminderung auf dem Rauchgasweg notwendig ist.

Bei den der Erfindung zugrundeliegenden Versuchen hat es sich als besonders vorteilhaft erwiesen, als reaktive Zusätze (Pfeil 28) eine Mischung aus Aktivkohle bzw. -koks und Bikarbonat zu verwenden. Die Menge und/oder Zusammensetzung dieser Mischung wird in Abhängigkeit des Reinigungswertes des Rauchgases nach dem Filter 6 geregelt. Üblicherweise wird dabei eine kontinuierliche Messung des Reinigungswertes des Rauchgases durchgeführt.

Bei der erfindungsgemäßen Anlage ist der gesamte verfahrenstechnische Aufwand für die Rauchgasreinigung gegenüber den herkömmlichen Anlagen erheblich reduziert.

Neben der Absenkung des NOₓ-Gehalts werden auch alle anderen relevanten Emissionswerte eingehalten, wobei der Aufwand gegenüber den konventionellen, mindestens 5-stufigen Rauchgasreinigungsverfahren drastisch verringert wird.

## Patentansprüche

1. Verfahren zur thermischen Behandlung von Abfallstoffen, bei dem
a) die Abfallstoffe in einer ersten thermischen Behandlungszone (1) einer Pyrolyse unterzogen werden,
b) das dabei entstehende Pyrolysegas (Pfeil 7) zu mindestens 90 Prozent, vorzugsweise zu mindestens 95 Prozent, entstaubt wird,
c) das entstaubte Pyrolysegas in einer zweiten thermischen Behandlungszone (3) verbrannt wird,
d) das in der zweiten thermischen Behandlungszone entstehende Rauchgas abgekühlt wird,
e) anschließend das abgekühlte Rauchgas katalytisch entstickt wird und
f) schließlich durch Zugabe entsprechend reaktiver Zusätze (Pfeil 28) in einem Filter (6) von Schadstoffen gereinigt wird.

2. Verfahren zur thermischen Behandlung von Abfallstoffen, bei dem
a) die Abfallstoffe in einer ersten thermischen Behandlungszone (1) einer Pyrolyse unterzogen werden,
b) das dabei entstehende Pyrolysegas (Pfeil 7) zu mindestens 90 Prozent, vorzugsweise zu mindestens 95 Prozent, entstaubt wird,
c) das entstaubte Pyrolysegas in einer zweiten thermischen Behandlungszone (3) verbrannt wird,
d) anschließend das in der zweiten thermischen Behandlungszone entstehende Rauchgas nichtkatalytisch entstickt wird,
e) das entstickte Rauchgas abgekühlt wird und
f) schließlich durch Zugabe entsprechend reaktiver Zusätze (Pfeil 28) in einem Filter (6) von Schadstoffen gereinigt wird.

3. Verfahren nach Anspruch 1 oder 2, dadurch gekennzeichnet, daß das Pyrolysegas in einer Kühl- und Abscheidezone durch Eindüsen eines zugleich als Kühl-und Staubabscheidemittel wirkenden Öls auf eine Temperatur von höchstens 250°C abgekühlt wird.

4. Verfahren nach Anspruch 3, dadurch gekennzeichnet, daß das Pyrolysegas durch das Öl auf eine oberhalb des Taupunktes liegende Temperatur, vorzugsweise auf eine Temperatur zwischen 120 und 180°C abgekühlt wird.

5. Verfahren nach Anspruch 3, dadurch gekennzeichnet, daß das Pyrolysegas durch das Öl zu wenigstens 95 Prozent entstaubt wird.

6. Verfahren nach Anspruch 3, dadurch gekennzeichnet, daß das als Kühl- und Staubabscheidemittel wirkende Öl im Gegenstrom zum Pyrolysegas vorzugsweise von oben nach unten durch die Kühl- und Staubabscheidezone geführt wird.

7. Verfahren nach Anspruch 3, dadurch gekennzeichnet, daß das in seiner Temperatur geregelte Öl in mehreren übereinanderliegenden Ebenen der Kühl- und Staubabscheidezone in das aufsteigende Pyrolysegas eingedüst wird.

8. Verfahren nach Anspruch 3, dadurch gekennzeichnet, daß das heiße, staubbeladene Öl niveaugeregelt aus dem unteren Bereich der Kühl- und Staubabscheidezone abgezogen und durch Zentrifugieren in eine erste, stark staubhaltige Phase und eine zweite, weitgehend staubfreie Phase getrennt wird, wobei die erste Phase der Schwelzone zugeführt und die zweite Phase nach Rückkühlung erneut der Kühl- und Staubabscheidezone zugeleitet wird.

9. Verfahren nach Anspruch 3, dadurch gekennzeichnet, daß die Kühl- und Staubabscheidezone (2) vom Pyrolysegas nacheinander durchströmte Kühl- und Staubabscheidestufen enthält, wobei das in diesen beiden Stufen anfallende heiße, staubbeladene Öl, vorzugsweise gemeinsam, durch Staubabtrennung und Rückführung aufbereitet wird.

10. Verfahren nach Anspruch 1 oder 2, dadurch gekennzeichnet, daß den Abfallstoffen zur Einbindung der bei der Pyrolyse in der ersten thermischen Behandlungszone freiwerdenden sauren, gasförmigen Schadstoffe feinkörnige, basische Materialien, wie Calciumhydroxid, Calciumkarbonat und/oder Calcium-oxyd, zugegeben werden.

11. Verfahren nach Anspruch 8, dadurch gekennzeichnet, daß im Anfahrbetrieb, bei Durchsatzschwankungen sowie zum Ersatz der aus dem Ölkreislauf abgezogenen, staubhaltigen Phase eine entsprechend dosierte Menge von hochsiedendem Öl, vorzugsweise Diesel- oder Heizöl, dem Ölkreislauf zugeführt wird.

12. Verfahren nach Anspruch 1 oder 2, dadurch gekennzeichnet, daß durch das Abkühlen des Rauchgases Energie gewonnen wird.

13. Verfahren nach Anspruch 1, dadurch gekennzeichnet, daß das Pyrolysegas in einem Heißgasfilter entstaubt wird und der abgeschiedene Staub in trockener Form anfällt.

14. Verfahren nach Anspruch 13, dadurch gekennzeichnet, daß dem Pyrolysegas vor der Entstaubung zusätzlich feinkörnige, basische Materialien zugegeben werden.

15. Verfahren nach Anspruch 1 oder 2, dadurch gekennzeichnet, daß das Pyrolysegas vor der Entstaubung auf eine höhere Temperatur gebracht wird.

16. Verfahren nach Anspruch 1 oder 2, dadurch gekennzeichnet, daß das Rauchgas nach der Entstickung, jedoch vor der Reinigung im Filter auf die optimale Abscheidetemperatur des Filters weiter abgekühlt wird.

17. Verfahren nach Anspruch 1 oder 2, dadurch gekennzeichnet, daß ein Teil des Rauchgases der zweiten thermischen Behandlungszone zur Beheizung der ersten thermischen Behandlungszone verwendet wird.

18. Verfahren nach Anspruch 2, dadurch gekennzeichnet, daß die nichtkatalytische Entstickung aurcn Zugabe von Ammoniak, Ammoniakwasser oder Harnstoff erfolgt.

19. Verfahren nach Anspruch 18, dadurch gekennzeichnet, daß die Zugabe von Ammoniak, Ammoniakwasser oder Harnstoff in einen Teil des Rauchgases der zweiten thermischen Behandlungszone erfolgt, der zur Beheizung der ersten thermischen Behandlungszone verwendet wird.

20. Verfahren nach einem der vorhergehenden Ansprüche, dadurch gekennzeichnet, daß als reaktive Zusätze (Pfeil 28) eine Mischung aus Aktivkohle bzw. -koks und Bikarbonat dem Rauchgas zugegeben wird.

21. Verfahren nach Anspruch 20, dadurch gekennzeichnet, daß die Menge und/oder Zusammensetzung der Mischung in Abhängigkeit des Reinigungswertes des Rauchgases nach dem Filter geregelt wird.

22. Anlage zur thermischen Behandlung von Abfallstoffen mit
a) einem Drehofen (1) zur Pyrolyse der Abfallstoffe,
b) einer Entstaubungseinrichtung (2; 2'), um die im Drehofen (1) entstehenden Pyrolysegase zu wenigstens 90 Prozent zu entstauben,
c) eine Brennkammer (3) zur Verbrennung des entstaubten Pyrolysegases,
d) eine Einrichtung zur Abkühlung (Abhitzekessel 4) des in der Brennkammer (3) entstehenden Rauchgases,
e) eine nachgeschaltete Einrichtung (5) zur katalytischen Entstickung des Rauchgases,
f) eine Einrichtung zur Zugabe (Pfeil 28) entsprechend reaktiver Zusätze zum entstickten Rauchgas sowie
g) einen Filter (6) zur Reinigung der Rauchgase von Schadstoffen.

23. Anlage nach Anspruch 22, dadurch gekennzeichnet, daß die Entstaubungseinrichtung als Heißgas-Entstaubungseinrichtung ausgebildet ist.

24. Anlage nach Anspruch 22, dadurch gekennzeichnet, daß die Einrichtung zur Abkühlung des Rauchgases als Abhitzekessel 4 ausgebildet ist.

25. Anlage zur thermischen Behandlung von Abfallstoffen mit
a) einem Drehofen (1) zur Pyrolyse der Abfallstoffe,
b) einer Entstaubungseinrichtung (2; 2'), um die im Drehofen (1) entstehenden Pyrolysegase zu wenigstens 90 Prozent zu entstauben,
c) eine Brennkammer (3) zur Verbrennung des entstaubten Pyrolysegases,
d) eine nachgeschaltete Einrichtung (5') zur nichtkatalytischen Entstickung des in der Brennkammer (3) entstehenden Rauchgases,
e) eine Einrichtung zur Abkühlung (Abhitzekessel 4) des entstickten Rauchgases,
f) eine Einrichtung zur Zugabe (Pfeil 28) entsprechend reaktiver Zusätze zum entstickten Rauchgas sowie
g) einen Filter (6) zur Reinigung der Rauchgase von Schadstoffen.

## Claims

1. Method of heat treatment of waste materials, in which
a) the waste materials are subjected to pyrolysis in a first heat treatment zone (rotary kiln 1),
b) at least 90%, preferably at least 95% of the dust is removed from the pyrolysis gas (arrow 7) produced thereby,
c) the dedusted pyrolysis gas is burnt in a second heat treatment zone (combustion chamber 3) ,
d) the flue gas produced in the second heat treatment zone is cooled,
e) then the cooled flue gas is denitrogenated catalytically, and
f) finally is purified of harmful substances in a filter (6) by the addition of appropriately reactive additives (arrow 28).

2. Method of heat treatment of waste materials, in which
a) the waste materials are subjected to pyrolysis in a first heat treatment zone (rotary kiln 1),
b) at least 90%, preferably at least 95% of the dust is removed from the pyrolysis gas (arrow 7) produced thereby,
c) the dedusted pyrolysis gas is burnt in a second heat treatment zone (combustion chamber 3),
d) then the flue gas produced in the second heat treatment zone is denitrogenated non-catalytically,
e) the denitrogenated flue gas is cooled and
f) finally is purified of harmful substances in a filter (6) by the addition of appropriately reactive additives (arrow 28).

3. Method as claimed in Claim 1 or 2, characterised in that the pyrolysis gas is cooled to a temperature of at most 250°C in a cooling and separation zone by the injection of an oil which acts simultaneously as cooling and dust separating agent.

4. Method as claimed in Claim 3, characterised in that the pyrolysis gas is cooled by the oil to a temperature above the dew point, preferably to a temperature between 120 and 180°C.

5. Method as claimed in Claim 3, characterised in that at least 95% of the dust is removed from the pyrolysis gas.

6. Method as claimed in Claim 3, characterised in that the oil which acts as cooling and dust separating agent is passed through the cooling and dust separation zone preferably from top to bottom in counterflow to the pyrolysis gas.

7. Method as claimed in Claim 3, characterised in that the oil which is regulated in temperature is injected into the rising pyrolysis gas in a plurality of planes which lie one above the other in the cooling and dust separating zone.

8. Method as claimed in Claim 3, characterised in that the hot dust-laden oil is drawn off with its level regulated out of the lower region of the cooling and dust separation zone and is separated by centrifugation into a first phase with a high dust content and a second phase which is largely free of dust, the first phase with a high dust content being delivered to the low-temperature carbonisation zone and the second phase after recooling being again delivered to the cooling and dust separation zone.

9. Method as claimed in claim 3, characterised in that cooling and dust separation zone (2) contains two cooling and dust separation stages through which pyrolysis gas flows in succession, and the hot dust-laden oil collecting in these two stages is prepared, preferably all together, by dust separation and recycling.

10. Method as claimed in Claim 1 or 2, characterised in that fine-grained basic materials such as calcium hydroxide, calcium carbonate and/or calcium oxide are added to the waste materials for fixing the acid gaseous harmful substances which are released during the pyrolysis in the first heat treatment zone.

11. Method as claimed in Claim 8, characterised in that in start-up mode, in the case of fluctuations of throughput and for replacement of the dust-laden phase removed from the oil circuit a correspondingly dosaged quantity of high-boiling oil, preferably diesel or heating oil, is delivered to the oil circuit.

12. Method as claimed in Claim 1 or 2, characterised in that energy is recovered by cooling the flue gas.

13. Method as claimed in Claim 1, characterised in that the pyrolysis gas is dedusted in a hot gas filter and the precipitated dust is collected in dry form.

14. Method as claimed in Claim 13, characterised in that fine-grained basic materials are additionally added to the pyrolysis gas before the dust removal.

15. Method as claimed in Claim 1 or 2, characterised in that the pyrolysis gas is brought to a higher temperature before the dust removal.

16. Method as claimed in Claim 1 or 2, characterised in that the flue gas is further cooled to the optimum precipitation temperature of the filter before the denitrogenation but before the purification in the filter.

17. Method as claimed in Claim 1 or 2, characterised in that a proportion of the flue gas from the second heat treatment zone is used for heating the first heat treatment zone.

18. Method as claimed in Claim 2, characterised in that the non-catalytic denitrogenation takes place by the addition of ammonia, ammonia water or urea.

19. Method as claimed in Claim 18, characterised in that the addition of ammonia, ammonia water or urea takes place into a part of the flue gas from the second heat treatment zone which is used for heating the first heat treatment zone.

20. Method as claimed in one of the preceding claims, characterised in that a mixture of activated charcoal or activated coke and bicarbonate is added to the flue gas as reactive additives (arrow 28).

21. Method as claimed in Claim 20, characterised in that the quantity and/or composition of the mixture is regulated as a function of the purification value of the flue gas after the filter.

22. Apparatus for heat treatment of waste materials with
a) a rotary kiln (1) for pyrolysis of the waste materials,
b) a dust-collecting arrangement (2; 2') in order to remove at least 90% of the dust from the pyrolysis gas produced in the rotary kiln (1),
c) a combustion chamber (3) for burning the dedusted pyrolysis gas,
d) an arrangement for cooling (waste heat boiler 4) the flue gas produced in the combustion chamber (3),
e) an arrangement (5) connected downstream for catalytic denitrogenation of the flue gas,
f) an arrangement for adding (arrow 28) appropriately reactive additives to the denitrogenated flue gas, and
g) a filter (6) for purifying the flue gases of harmful substances.

23. Apparatus as claimed in Claim 22, characterised in that the dust-collecting arrangement is constructed as a hot gas dust-collecting arrangement.

24. Apparatus as claimed in Claim 22, characterised in that the arrangement for cooling the flue gas is constructed as a waste heat boiler (4).

25. Apparatus for heat treatment of waste materials with
a) a rotary kiln (1) for pyrolysis of the waste materials,
b) a dust-collecting arrangement (2; 2') in order to remove at least 90% of the dust from the pyrolysis gas produced in the rotary kiln (1),
c) a combustion chamber (3) for burning the dedusted pyrolysis gas,
d) an arrangement (5') connected downstream for non-catalytic denitrogenation of the flue gas produced in the combustion chamber (3),
e) an arrangement for cooling (waste heat boiler 4) the denitrogenated flue gas,
f) an arrangement for adding (arrow 28) appropriately reactive additives to the denitrogenated flue gas, and
g) a filter (6) for purifying the flue gases of harmful substances.

## Revendications

1. Procédé de traitement thermique de matières de rebut, suivant lequel
a) les matières de rebut sont soumises à une pyrolyse dans une première zone de traitement thermique (four rotatif 1),
b) le gaz de pyrolyse qui est alors dégagé (flèche 7) est dépoussiéré à au moins 90 pour cent, de préférence à au moins 95 pour cent,
c) le gaz de pyrolyse dépoussiéré est brûlé dans une deuxième zone de traitement thermique (chambre de combustion 3).
d) le gaz de fumée émis dans la deuxième zone de traitement thermique est refroidi.
e) ensuite, le gaz de fumée refroidi subit une dénitruration catalytique et
f) il est finalement débarrassé des substances nocives par addition d'additifs réactionnels correspondants (flèche 28) dans un filtre (6).

2. Procédé de traitement thermique de matières de rebut, suivant lequel
a) les matières de rebut sont soumises à une pyrolyse dans une première zone de traitement thermique (four rotatif 1),
b) le gaz de pyrolyse qui est alors dégagé (flèche 7) est dépoussiéré à au moins 90 pour cent, de préférence à au moins 95 pour cent,
c) le gaz de pyrolyse dépoussiéré est brûlé dans une deuxième zone de traitement thermique (chambre de combustion 3),
d) ensuite, le gaz de fumée dégagé dans la deuxième zone de traitement thermique subit un dénitruration non catalytique,
e) le gaz de fumée dénitruré est refroidi et
f) il est finalement débarrassé des substances nocives par addition d'additifs réactionnels correspondants (flèche 28) dans un filtre (6).

3. Procédé selon la revendication 1 ou 2, caractérisé en ce que le gaz de pyrolyse est refroidi à une température qui est au maximum de 250°C dans une zone de refroidissement et de séparation par projection d'un fuel agissant également en agent de refroidissement et de séparation de la poussière.

4. Procédé selon la revendication 3, caractérisé en ce que le gaz de pyrolyse est refroidi par le fuel à une température supérieure au point de rosée, de préférence à une température comprise entre 120 et 180°C.

5. Procédé selon la revendication 3, caractérisé en ce que le gaz de pyrolyse est dépoussiéré à au moins 95 pour cent par le fuel.

6. Procédé selon la revendication 3, caractérisé en ce que le fuel agissant en agent de refroidissement et de séparation de la poussière est dirigé à contre-courant du gaz de pyrolyse, de préférence de haut en bas, dans la zone de refroidissement et de séparation de la poussière.

7. Procédé selon la revendication 3, caractérisé en ce que le fuel, dont la température est réglée, est projeté dans plusieurs plans superposés de la zone de refroidissement et de séparation de poussière dans le gaz de pyrolyse ascendant.

8. Procédé selon la revendication 3, caractérisé en ce que le fuel chaud, chargé de poussière, est soutiré à un niveau réglé de la partie inférieure de la zone de refroidissement et de séparation de poussière et il est séparé par centrifugation en une première phase à forte teneur en poussière et une deuxième phase pratiquement exempte de poussière, la première phase étant dirigée sur ia zone de distillation lente et la deuxième phase étant renvoyée après refroidissement dans la zone de refroidissement et de séparation de poussière.

9. Procédé selon la revendication 3, caractérisé en ce que la zone (2) de refroidissement et de séparation des poussières comprend des étages de refroidissement et de séparation de poussière qui sont parcourues successivement par le gaz de pyrolyse, le fuel chaud chargé de poussière. provenant de ces deux étages étant traité, de préférence en commun, par séparation des poussières et recyclage.

10. Procédé selon la revendication 1 ou 2, caractérisé en ce que des matières basiques à granulométrie fine, telles que de l'hydroxyde de calcium, du carbonate de calcium et/ou de l'oxyde de calcium sont additionnées aux matières de rebut afin de lier les substances nocives gazeuses acides qui sont libérées au cours de la pyrolyse effectuée dans la première zone de traitement thermique.

11. Procédé selon la revendication 8, caractérisé en ce qu'à la mise en marche, en cas de fluctuations de débit ainsi que pour remplacer la phase contenant de la poussière et soutirée sur le circuit du fuel, une quantité dosée en conséquence de fuel à point d'ébullition élevé, de préférence du fueloil diesel ou du fuel de chauffage est dirigée sur le circuit du fuel.

12. Procédé selon la revendication 1 ou 2. caractérisé en ce que de l'énergie est récupérée par le refroidissement du gaz de fumée.

13. Procédé selon la revendication 1, caractérisé en ce que le gaz de pyrolyse est dépoussiéré dans un filtre à gaz chaud et la poussière séparée se trouve sous forme sèche.

14. Procédé selon la revendication 13, caractérisé en ce que des matières basiques à granulométrie fine sont accessoirement additionnées au gaz de pyrolyse avant le dépoussiérage.

15. Procédé selon la revendication 1 ou 2. caractérisé en ce que le gaz de pyrolyse est porté à une température supérieure avant le dépoussiérage.

16. Procédé selon la revendication 1 ou 2, caractérisé en ce que le gaz de fumée subit une poursuite du refroidissement pour être mis à la température optimale de séparation du filtre à la fin de la dénitruration, mais avant l'épuration dans le filtre.

17. Procédé selon la revendication 1 ou 2. caractérisé en ce qu'une partie du gaz de fumée de la deuxième zone de traitement thermique est utilisée pour le chauffage de la première zone de traitement thermique.

18. Procédé selon la revendication 2, caractérisé en ce qu'une dénitruration non catalytique est effectuée par addition d'ammoniac, d'eau ammoniacale ou d'urée.

19. Procédé selon la revendication 18, caractérisé en ce que l'addition d'ammoniac, d'eau ammoniacale ou d'urée est effectuée dans une partie du gaz de fumée de la deuxième zone de traitement thermique qui est utilisée pour le chauffage de la première zone de traitement thermique.

20. Procédé selon l'une des revendications précédentes, caractérisé en ce que les additifs réactionnels (flèche 28) qui sont additionnés au gaz de fumée sont un mélange de charbon ou de coke actif et de bicarbonate.

21. Procédé selon la revendication 20, caractérisé en ce que la quantité et/ou la composition du mélange est réglée en fonction du taux d'épuration du gaz de fumée à la sortie du filtre.

22. Installation de traitement thermique de matières de rebut, comprenant
a) un four rotatif (1) de pyrolyse des matières de rebut,
b) un dispositif de dépoussiérage (2 ; 2') destiné à dépoussiérer à au moins 90% les gaz de pyrolyse produits dans le four rotatif (1),
c) une chambre de combustion (3) pour brûler le gaz de pyrolyse dépoussiéré,
d) un dispositif de refroidissement (chaudière de récupération 4) du gaz de fumée produit dans la chambre de combustion (3),
e) un dispositif (5) de dénitruration catalytique du gaz de fumée qui est monté en aval,
f) un dispositif d'addition (flèche 28) d'additifs réactionnels correspondants au gaz de fumée dénitruré, ainsi que
g) un filtre (6) pour débarrasser le gaz de fumée des substances nocives.

23. Installation selon la revendication 22, caractérisée en ce que le dispositif de dépoussiérage est conformé en dispositif de dépoussiérage de gaz chauds.

24. Installation selon la revendication 22, caractérisée en ce que le dispositif de refroidissement du gaz de fumée est conformé en chaudière de récupération (4).

25. Installation de traitement thermique de matières de rebut, comprenant
a) un four rotatif (1) de pyrolyse des matières de rebut,
b) un dispositif de dépoussiérage (2 : 2') pour dépoussiérer à au moins 90% les gaz de pyrolyse produits dans le four rotatif (1),
c) une chambre de combustion (3) pour brûler le gaz de pyrolyse dépoussiéré,
d) un dispositif (5'), monté en aval, de dénitruration non catalytique du gaz de fumée produit dans la chambre de combustion (3),
e) un dispositif de refroidissement (chaudière de récupération 4) du gaz de fumée dénitruré,
f) un dispositif d'addition (flèche 28) d'additifs réactionnels correspondants au gaz de fumée dénitruré, ainsi que
g) un filtre (6) pour débarrasser le gaz de fumée des substances nocives.
